# EUROPÄISCHE PATENTSCHRIFT

(11) **EP 0 531 795 B1**
(45) Veröffentlichungstag und Bekanntmachung des Hinweises auf die Patenterteilung: **25.10.1995**
(21) Anmeldenummer: 92114497.8
(22) Anmeldetag: 26.08.1992
(51) Int. Cl.: F28C 1/16, F28C 1/04

(54) **Kontaktkörper für einen Verdunstungskühler, insbesondere Kühlturm**
Contact body for an evaporation cooler, in particular for a cooling tower
Corps de contact pour un refroidisseur à évaporation, en particulier pour tour de refroidissement

(30) Priorität: 13.09.1991 DE 4130491
(43) Veröffentlichungstag der Anmeldung: 17.03.1993
(73) Patentinhaber: Munters Euroform GmbH, D-52072 Aachen (DE)
(72) Erfinder: Hommel, Dietmar, Dipl.-Ing. (FH), W-5100 Aachen (DE)
(74) Vertreter: Döring, Wolfgang, Dr.-Ing. Patentanwälte Hauck, Graalfs, Wehnert, Döring, Siemons

(56) Entgegenhaltungen:
- EP-A- 0 137 956
- EP-A- 0 151 547
- EP-A- 0 284 208
- DE-A- 2 045 082
- DE-C- 2 840 317

## Beschreibung

Die vorliegende Erfindung betrifft einen Kontaktkörper für einen Verdunstungskühler, insbesondere Kühlturm, mit den Merkmalen des Oberbegriffs des Patentanspruchs 1.

Um bei Verdunstungskühlern bei niedrigen Außenlufttemperaturen die Nebelschwadenbildung zu verringern, ist es bekannt, nur einen Teil der Spalten des Kontaktkörpers mit Wasser zu beaufschlagen, wodurch in den trockenen Spalten die Luft durch den wärmeleitenden Kontakt mit der Wasserschicht in den angrenzenden Spalten erwärmt wird. Beim Ausströmen aus dem Kontaktkörper wird die erwärmte Luft mit der feuchten Luft in einem solchen Verhältnis vermischt, daß das Luftgemisch beim Austritt in die Außenluft keinen Nebel bildet. Bei einer aus der DE-A-2 537 887 bekannten Einrichtung erfolgt die teilweise Beaufschlagung der Spalten mit Wasser durch entsprechend verlegte Rohre oder Rinnen, wobei der obere Teil des Kontaktkörpers plane Schichten aufweist.

Es ist ferner aus der DE-C-2 840 317 bekannt, die gewellten Schichten an ihrer Oberkante zu wabenförmigen Öffnungen umzuformen und jeweils ein Verteilerrohr einer bestimmten Reihe von Öffnungen zuzuordnen. Auf diese Weise ist es möglich, die Aufteilung in nasse und trockene Spalten vorzunehmen, ohne daß es eines aufwendigen Rohr- oder Wasserverteilungssystems bedarf. Ein Überströmen von Wasser aus den nassen in die trockenen Spalten ist unmöglich. Der aus dieser Veröffentlichung bekannte Kontaktkörper weist die Merkmale des Oberbegriffs des Patentanspruchs 1 auf.

Der Erfindung liegt die Aufgabe zugrunde, einen Kontaktkörper der angegebenen Art zu schaffen, der einen besonders einfachen Aufbau besitzt und keine speziellen Maßnahmen in bezug auf die Anordnung und Ausbildung der Wasserverteilereinrichtungen benötigt.

Diese Aufgabe wird erfindungsgemäß bei einem Kontaktkörper der angegebenen Art durch die kennzeichnenden Merkmale des Patent anspruchs 1 gelöst.

Durch die erfindungsgemäß getroffenen Maßnahmen wird in besonders einfacher Weise eine Aufteilung in nasse und trockene Spalten erreicht. Jeweils benachbarte Schichten liegen mit ihren oberen ebenen Rändern aneinander an und sind in wasserdichter Weise aneinander befestigt. Das von der Verteilereinrichtung abgegebene Wasser kann daher nicht in die unterhalb dieser Verbindungsstellen vorhandenen Spalten eindringen. Diese Spalten bleiben daher trocken. Die zwischen zwei Verbindungsstellen befindlichen Spalten bleiben nach oben hin offen, so daß in diese Spalten Wasser eindringen kann und entsprechend nasse Spalten gebildet werden. Es sind daher abwechselnd vertikale Reihen von trockenen und nassen Spalten vorgesehen, so daß die zur Vermeidung von Nebelschwadenbildung bzw. zur Schaffung von schwadenfreien Bedingungen erforderlichen Wärme- und Stoffaustauschvorgänge zwischen den Wasserschichten in den nassen Spalten und den Luftschichten in den nassen und den trockenen Spalten ablaufen können.

Die erfindungsgemäß vorgesehenen Maßnahmen lassen sich herstellungstechnisch sehr einfach verwirklichen. Die einzelnen Schichten werden vorzugsweise aus geeignetem Kunststoff tiefgezogen, wobei der beim Tiefziehen ohnehin verbleibende ebene Rand genutzt wird, um den erfindungsgemäß vorgesehenen ebenen nicht-gewellten oberen Rand zu schaffen. Die beim Tiefziehen vorhandenen seitlichen Ränder werden später abgeschnitten, um das Eindringen von Luft im Querstrom oder Gegenstrom in den Kontaktkörper zu ermöglichen.

Die einzelnen tiefgezogenen Schichten werden dann nach dem Abtrennen der vorderen und hinteren Ränder so aufeinander gestapelt, daß sich einander überkreuzende Wellungen von benachbarten Schichten ergeben und die Schichten mit ihren oberen Rändern aneinanderliegen. Die Ränder werden dann wasserdicht miteinander verbunden, vorzugsweise durch Schweißen. Es ergibt sich somit insgesamt ein sehr einfaches Herstellverfahren der Kontaktkörper.

Die Erfindung hat ferner den Vorteil, daß keine speziellen Maßnahmen in bezug auf die Anordnung und Ausbildung der Wasserverteilereinrichtungen getroffen werden müssen. Diese müssen weder in ganz bestimmten Abständen voneinander noch in unterschiedlichen Höhen angeordnet werden. Einfach ausgebildete Düseneinrichtungen sind vollständig ausreichend, wenn diese eine relativ gleichmäßige Wasserverteilung über die Breite bzw. Länge des Kontaktkörpers sicherstellen. Das von der Verteilereinrichtung abgegebene Wasser läuft ohnehin aufgrund der durch die Wellungen gebildeten Schrägen in die einzelnen nassen Spaltenreihen, so daß die Verteilereinrichtung nicht in den Kontaktkörper integriert werden muß. Wie erwähnt, ist lediglich dafür Sorge zu tragen, daß sich eine etwa gleichmäßige Wasserverteilung über die Oberfläche des Kontaktkörpers ergibt.

Vorzugsweise weisen die Schichten ebenfalls jeweils einen ebenen nichtgewellten unteren Rand auf, über den benachbarte Schichten mit sich überkrenzenden Wellungen wasserdicht aneinander befestigt sind, wobei die wasserfreien Spalten oberhalb der unteren Ränder und die vom Wasser durchflossenen Spalten zwischen den unteren Rändern angeordnet sind. Hierdurch ergeben sich feste kompakte Kontaktkörperblöcke. Durch das Tiefziehen der einzelnen Schichten sind auch die unteren Ränder bereits bedingt durch das Herstellverfahren vorhanden. Die Luft durchdringt hierbei den Kontaktkörperblock allgemein in Querrichtung, d. h. von hinten nach vorne, da die Kontaktkörperblöcke an der Vorder- und Hinterseite offen und nicht gekapselt sind.

Was die Wellungen der einzelnen Schichten anbetrifft, so bilden diese vorzugsweise einen Winkel ≦ 45° mit der Horizontalen. Es versteht sich, daß der hier verwendete Begriff "Wellungen" allgemeiner Natur sein und auch vergleichbare Vertiefungen bzw. Erhebungen, wie beispielsweise Rippen, Grate etc., umfassen soll. Die hier vorzugsweise zur Anwendung gelangenden Winkel sichern eine relativ geringe Steigung der Wellungen, so daß das Wasser in den nassen Spalten eine relativ lange Verweilzeit innerhalb der Kontaktkörperblöcke besitzt. Hierdurch wird einerseits ein relativ langer Kontakt zwischen Gas und Flüssigkeit gesichert und andererseits ein guter Wärme- und Stoffaustausch zwischen den nassen und trockenen Spalten bewerkstelligt.

Die Schichten sind zweckmäßigerweise vertikal angeordnet und stehen in einem Kontaktkörperblock nebeneinander. Die Zahl der nebeneinander angeordneten Schichten ist nicht kritisch; vorzugsweise werden jedoch ca. 30 Schichten in einem Kontaktkörperblock angeordnet. Es kann eine Vielzahl von Kontaktkörperblöcken übereinander angeordnet sein. Die Blöcke bilden insgesamt einen Kontaktkörper. Unterhalb eines jeden Kontaktkörperblocks befindet sich zweckmäßigerweise eine Wasserauffang- und -verteilerwanne, so daß das aus den nassen Spalten nach unten austretende Wasser nicht unmittelbar auf den darunter befindlichen Kontaktkörperblock trifft, sondern über die Verteilerwanne entsprechend verteilt wird. Vorzugsweise ist daher oberhalb eines jeden Kontaktkörperblocks eine entsprechende Verteilereinrichtung angeordnet.

Es hat sich als zweckmäßig erwiesen, den Kontaktkörperblock so anzuordnen, daß seine Längsachse parallel zur Längsachse der Verteilereinrichtung verläuft. Bei der Verteilereinrichtung kann es sich dabei um ein einziges, etwa mittig in bezug auf den Kontaktkörperblock angeordnetes Rohr handeln, an dessen Unterseite in Abständen entsprechende Wasseraustrittsöffnungen (Düsen) angeordnet sind. Hiermit gelingt es, eine etwa gleichmäßige Wasserverteilung auf der Oberfläche des Kontaktkörperblocks sicherzustellen. Weitere Maßnahmen müssen nicht getroffen werden, da die Aufteilung in nasse und trockene Spalten durch die entsprechenden Verbindungsstellen an den oberen Rändern benachbarter Schichten erreicht wird.

Zur weiteren Verbesserung der Funktionsfähigkeit des erfindungsgemäß ausgebildeten Kontaktkörpers sind in die Schichten des Kontaktkörperblocks am in Strömungsrichtung der seitlich in denselben eindringenden Luft hinteren Schichtende (Luftaustrittsende) Tropfenabscheider integriert. Hierdurch wird sichergestellt, daß die den Kontaktkörperblock durchströmende Luft bei ihrem Austritt aus demselben keine Wassertropfen mitreißt. Die Tropfenabscheider sind dabei speziell so ausgebildet, daß sie durch eine Vielzahl von übereinander angeordneten Wellungen gebildet sind, die in Strömungsrichtung der Luft einen Abschnitt mit geringer Steigung, einen Abschnitt mit großer Steigung und einen Abschnitt mit geringer Steigung aufweisen, wobei die Übergänge zwischen den Abschnitten diskontinuierlich ausgebildet sind. Durch diese Diskontinuitäten bleiben die mitgeführten Wassertropfen an den Abschnitten mit großer Steigung hängen und werden nicht aus dem Kontaktkörperblock mit herausgeführt. Die einzelnen Schichten weisen zweckmäßigerweise vor den Tropfenabscheidern eine sich von oben nach unten erstreckende Ablaufrinne auf. Die an den Tropfenabscheidern hängen bleibenden Wassertropfen laufen dann durch Schwerkraft zurück in die Ablaufrinne und werden von dieser nach unten aus dem Kontaktkörperblock herausgeführt. Diese Ausgestaltung der einzelnen Schichten des Kontaktkörperblocks sichert einen weitgehend tropfenfreien Austritt der den Block durchströmenden Luft.

Wie bereits erwähnt, weisen benachbarte aneinander befestigte Schichten einander kreuzende Wellungen auf. Hierbei steigen die Wellungen der einen Schicht in Strömungsrichtung der seitlich eintretenden Luft an, während die Wellungen der benachbarten Schicht abfallen. Im zweiten Fall läuft das von oben in den Kontaktkörperblock eingeführte Wasser durch die gebildeten Spalten in Strömungsrichtung der Luft schräg nach unten und gelangt dort in die vorgesehene vertikale Ablaufrinne. Da ferner an diesem Ende die Tropfenabscheider vorgesehen sind, wird ein seitliches Austreten des Wassers verhindert. Im erstgenannten Fall kann jedoch das oben eingeführte Wasser durch die nach vorne geneigten Spalten am vorderen Ende des Kontaktkörperblocks austreten. Um dies zu verhindern, weisen die Schichten mit in Strömungsrichtung der Luft ansteigenden Wellungen im Lufteintrittsbereich einen Abschnitt mit entgegengesetzter Steigung der Wellungen auf.

Es bilden sich daher Wellenknicke, in denen sich das Wasser sammeln kann und in den Block zurückgeführt wird. Ein Austreten zur Vorderseite hin wird dadurch vermieden.

In Weiterbildung der Erfindung weisen die Schichten mit in Strömungsrichtung der Luft ansteigenden oder abfallenden Wellungen im Lufteintrittsbereich eine sich von oben nach unten erstreckende Ablaufrinne auf. Diese Ablaufrinne kann zusätzlich zu der vorstehend erwähnten Ablaufrinne angeordnet sein. Sie ist vorzugsweise an der Übergangsstelle zwischen dem Wellungsabschnitt mit entgegengesetzter Steigung und den in Strömungsrichtung der Luft ansteigenden Wellungen angeordnet, d. h. trennt beim Zusammenfügen der Schichten im nassen Kanal den Lufteintrittsbereich (Jalousie) vom benetzten Füllkörperbereich. Durch die Ablaufrinne wird erreicht, daß sich in diesem Jalousiebereich eine größere Menge Wasser sammeln kann und nach unten abgeleitet wird. Durch diese Ansammlung des Wassers wird die Winterbetriebsproblematik des Kreuzstromkühlturmprozesses - extrem kalte Luft führt zur Eisbildung an nassen und feuchten Flächen - reduziert.

Die in der Rinne gesammelte größere Menge des noch warmen Kühlwassers erwärmt die Kunststoffwand zum trockenen Kanal stärker. Dadurch wird auch die eintretende kalte Luft schneller erwärmt und die Tendenz zur Eisbildung zu niedrigeren Lufttemperaturen hin verschoben.

Erfindungsgemäß wird ferner vorgeschlagen, die Ränder der Schichten zu verstärken. Dies wird insbesondere als zusätzliche Maßnahme zum Aneinanderschweißen oder Aneinanderkleben vorgenommen, wobei die Verstärkung vorzugsweise kapppenförmig ausgebildet ist und beide Ränder übergreift. Damit wird das Eindringen von Feuchtigkeit zwischen die aneinander befestigten Ränder, das zu einem Lösen der Verbindung führen könnte, verhindert.

Die Erfindung wird nachfolgend anhand von Ausführungsbeispielen in Verbindung mit der Zeichnung im einzelnen erläutert. Es zeigen:
- Figur 1: eine perspektivische Darstellung eines drei Kontaktkörperblöcke aufweisenden Kontaktkörpers mit zugehöriger Wasserverteilereinrichtung;
- Figur 2: eine Seitenansicht einer ersten Schicht des Kontaktkörpers der Figur 1;
- Figur 3: eine Seitenansicht einer zweiten Schicht des Kontaktkörpers der Figur 1;
- Figur 4: eine Vorderansicht auf einen Teil des Kontaktkörpers der Figur 1;
- Figur 5: eine Seitenansicht einer ersten Schicht einer weiteren Ausführungsform eines Kontaktkörpers;
- Figur 6: eine Seitenansicht einer zweiten Schicht der weiteren Ausführungsform des Kontaktkörpers; und
- Figur 7: eine Vorderansicht auf einen Teil noch einer weiteren Ausführungsform eines Kontaktkörpers.

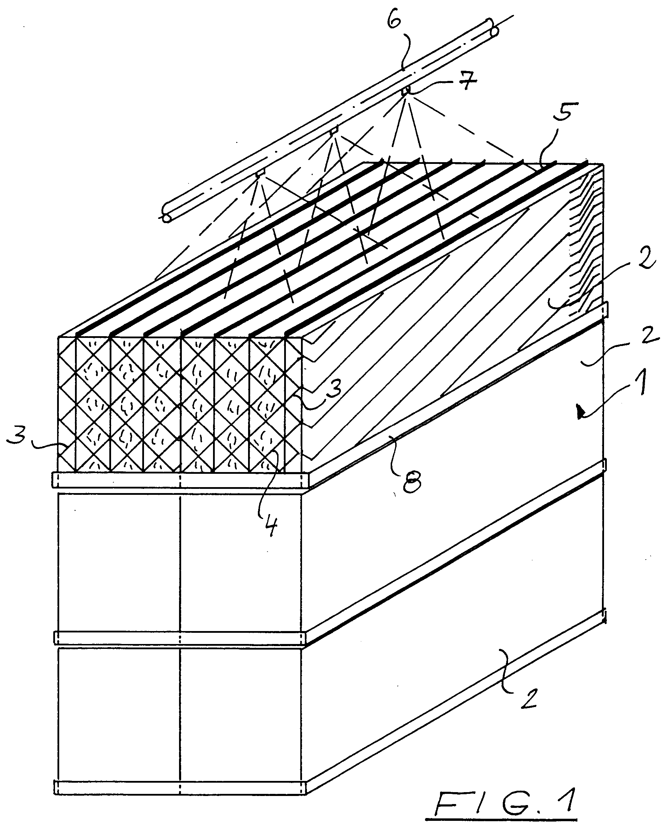

Figur 1 zeigt einen für einen Verdunstungskühler, insbesondere Kühlturm, geeigneten Kontaktkörper 1, der sich aus drei übereinander angeordneten Kontaktkörperblöcken 2 zusammensetzt. Jeder Kontaktkörperblock 2 besteht aus einer Vielzahl von nebeneinander angeordneten, vertikalen Schichten 3, die aneinander befestigt sind und insgesamt einen homogenen Block bilden. Über dem obersten Kontaktkörperblock 2 befindet sich eine Wasserverteileinrichtung 6 in der Form eines Rohres, an dessen Unterseite in Abständen Düsen angeordnet sind, über die Wasser gleichmäßig auf die Oberfläche des obersten Kontaktkörperblocks abgegeben wird. Unter jedem Kontaktkörperblock 2 befindet sich eine Wasseraufnahme- und -verteilerwanne 8, mittels der das unten aus dem entsprechenden Kontaktkörperblock austretende Wasser gesammelt und entsprechend verteilt wird, um auf den nächsten Kontaktkörperblock abgegeben zu werden.

Den Aufbau der einzelnen Kontaktkörperblöcke zeigen die Figuren 2 bis 4. Wie erwähnt, setzt sich jeder Block aus einer Vielzahl von nebeneinander und vertikal angeordneten Schichten 3 zusammen. Bei diesen Schichten handelt es sich um mit entsprechenden Wellungen 4 versehene Kunststofffolien, die insbesondere durch Tiefziehen hergestellt werden. Der Kontaktkörperblock setzt sich abwechselnd aus Schichten der in Figur 2 gezeigten Art und der in Figur 3 gezeigten Art zusammen. Die Schicht 3 der Figur 2 weist in Strömungsrichtung der Luft (in der Figur etwa horizontal von links nach rechts) ansteigende Wellungen 4 auf, während die Schicht der Figur 3 in Strömungsrichtung der Luft abfallende Wellungen 4 besitzt. Werden derartige Schichten abwechselnd aneinandergesetzt, so kreuzen sich die Wellungen benachbarter Schichten, so daß aufwärts- und abwärtsgerichtete Spalten 13 gebildet werden. Die Wellungen sind unter einem Winkel ≦ 45° zur Horizontalen angeordnet.

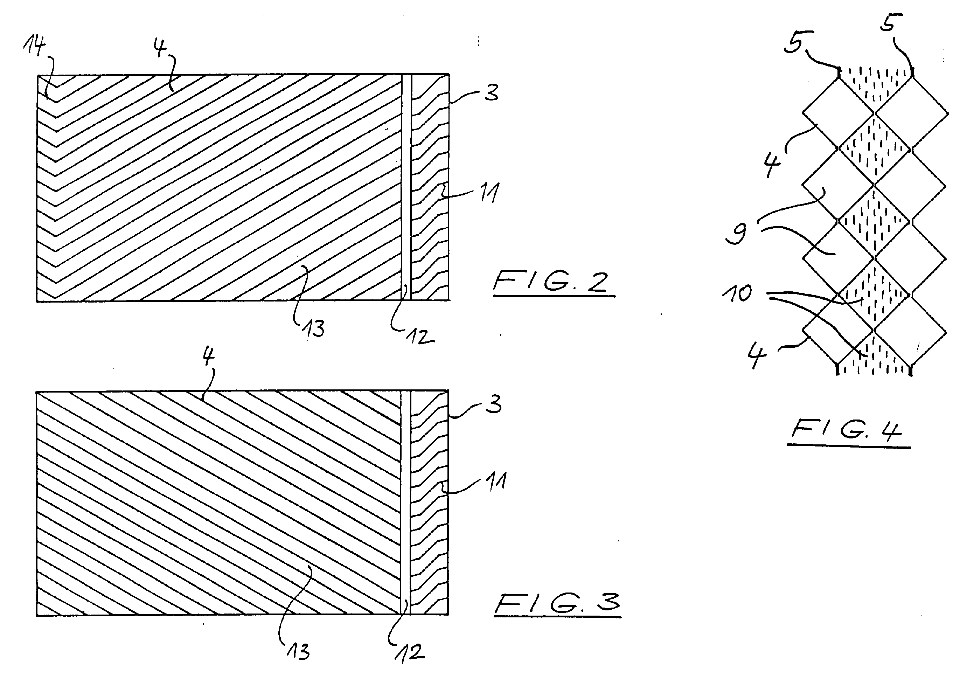

Figur 4 zeigt mehrere aneinander befestigte Schichten 3. Man erkennt, daß die Schichten einen oberen ebenen und von Wellungen freien Rand 5 besitzen, über den benachbarte Schichten mit sich überkreuzenden Wellungen wasserdicht aneinander befestigt sind. Es ergeben sich dadurch unterhalb der jeweiligen Verbindungsstellen wasserfreie Spalten 9, während zwischen den jeweiligen Verbindungsstellen nasse Spalten 10 entstehen. Auf diese Weise werden abwechselnd trockene und nasse Spalten gebildet, durch die eine entsprechende Nebelschwadenbildung des Verdunstungskühlers verhindert wird.

Beide Arten von Schichten weisen an ihrem in Luftströmungsrichtung hinteren Ende übereinander angeordnete Tropfenabscheider 11 auf. Diese Tropfenabscheider werden durch Wellungsabschnitte gebildet, die anfangs einen Abschnitt geringerer Steigung, dann einen mittleren Abschnitt mit größerer Steigung und schließlich wieder einen Abschnitt mit geringerer Steigung aufweisen. Die von der Luft mitgeführten Wassertropfen schlagen dabei am Abschnitt größerer Steigung an, da sie aufgrund ihrer Trägheit die entsprechenden Umlenkungen nicht mitmachen. Das Wasser läuft dann zurück in eine vor dem Tropfenabscheidern angeordnete Ablaufrinne 12 und gelangt von dort in die unter dem Kontaktkörperblock befindliche Verteilerwanne 8.

Beide Schichtenarten unterscheiden sich ferner dadurch, daß die in Figur 2 gezeigte Schicht mit in Strömungsrichtung der Luft ansteigenden Wellungen in ihrem vorderen Abschnitt Wellungsabschnitte 14 mit entgegengesetzter Steigung aufweist. Diese Abschnitte verhindern ein Austreten von Wasser an der Vorderseite des Kontaktkörperblocks.

Der Kontaktkörperblock funktioniert in der folgenden Weise: Wasser wird über die Verteilereinrichtung 6 gleichmäßig auf die Oberfläche des Kontaktkörperblocks 2 gesprüht. Aufgrund der über die aneinander befestigten Randbereiche 5 oben geschlossenen Spalten kann das Wasser nur jede übernächste Spaltenreihe nach unten durchlaufen, so daß die in Figur 4 gezeigten trockenen Spalten 9 und nassen Spalten 10 gebildet werden. Luft strömt von der Vorderseite des Kontaktkörperblocks ein und trifft im Querstrom auf das durch die nassen Spalten laufende Wasser. Hierbei findet der gewünschte Wärme- und Stoffaustausch statt. Darüber hinaus wird durch den in den nassen Spalten stattfindenden Wärmeaustausch und die Wärmeableitung über die Wandung der Schichten die durch die trockenen Spalten 9 strömende Luft erwärmt, so daß durch die Vermischung der beiden Luftströme nach dem Austritt aus dem Kontaktkörperblock die gewünschte Vermeidung einer Nebelschwadenbildung erreicht wird. Die Luft tritt aus dem hinteren Ende des Kontaktkörperblocks durch Passieren der einzelnen Tropfenabscheider 11 nahezu tropfenfrei aus. Das verbleibende Wasser läuft über die Ablaufrinne 12 nach unten in die jeweiligen Verteilerbecken 8 und wird von dort auf den nächsten Kontaktkörperblock abgegeben.

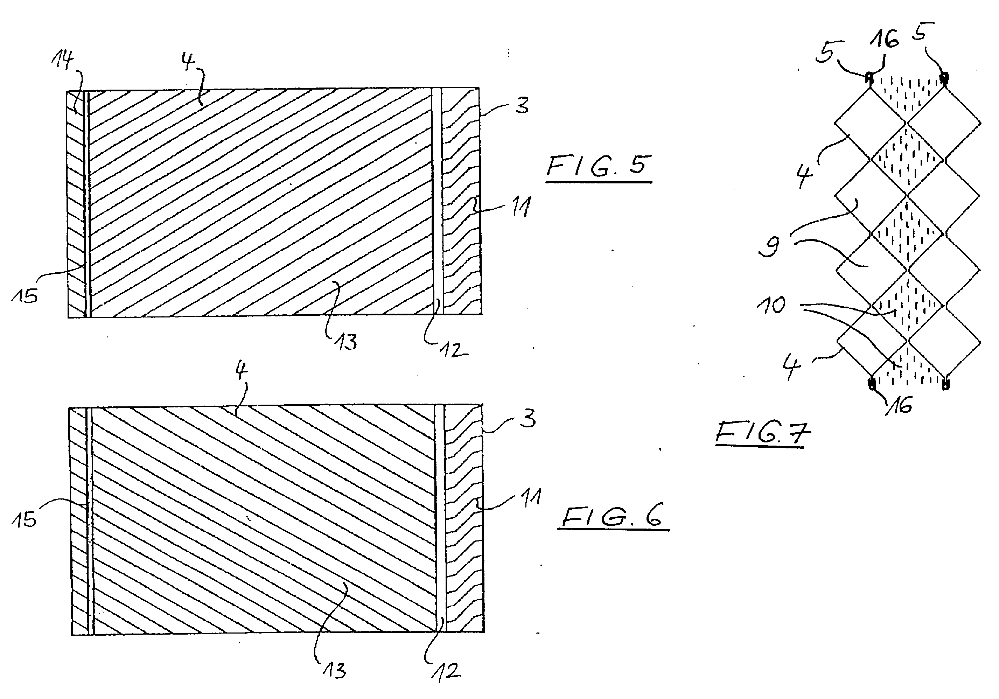

Die Figuren 5 und 6 zeigen eine Seitenansicht einer ersten Schicht und einer zweiten Schicht einer weiteren Ausführungform eines Kontaktkörpers. Dieser Kontaktkörper ist mit den gleichen Bezugszeichen versehen wie der der Figuren 2 bis 4, da er im wesentlichen den gleichen Aufbau wie dieser hat. Zusätzlich ist lediglich im Lufteintrittsbereich eine sich von oben nach unten erstreckende Ablaufrinne 15 vorgesehen, die an der Übergangsstelle zwischen dem Wellungsabschnitt 14 mit entgegengesetzter Steigung und den in Strömungsrichtung der Luft ansteigenden Wellungen 4 angeordnet ist. Diese Ablaufrinne trennt den Lufteintrittsbereich vom benetzten Füllkörperbereich und sammelt das im Lufteintrittsbereich (Jalousiebereich) angesammelte Wasser und führt dieses nach unten ab.

Figur 7 zeigt eine Vorderansicht auf einen Teil einer weiteren Ausführungsform eines Kontaktkörpers, der ebenfalls entsprechend ausgebildet ist wie die vorher beschriebenen Ausführungsbeispiele. Er weist lediglich zusätzlich noch zu den verklebten bzw. verschweißten oberen und unteren Randbereichen 5 der Schichten Verstärkungen 16 für diese auf, die kappenförmig ausgebildet sind und die aneinander befestigten Randbereiche übergreifen. Hierdurch werden die aneinander befestigten Randbereiche besonders gut gesichert.

## Patentansprüche

1. Kontaktkörper (1) für einen Verdunstungskühler, insbesondere Kühlturm, mit mindestens einem Kontaktkörperblock (2), der sich aus einer Vielzahl von vertikal oder schräg angeordneten, gewellten Schichten (3) zusammensetzt, wobei die Wellungen (4) benachbarter Schichten (3) einander überkreuzend angeordnet sind und zwischen sich Spalten (9, 10) bilden, die von Luft und Wasser, das aus einer dem Kontaktkörperblock (2) zugeordneten Verteilereinrichtung (6) abgegeben wird, im Querstrom durchströmt werden, wobei benachbarte Schichten (3) aneinanderliegen und derart miteinander verbunden sind, daß sich wasserfreie (9) und vom Wasser durchflossene (10) Spaltenreihen ergeben, dadurch gekennzeichnet, daß die Schichten (3) jeweils einen ebenen nicht-gewellten oberen Rand (5) aufweisen, über den benachbarte Schichten (3) mit sich überkreuzenden Wellungen (4) wasserdicht aneinander befestigt sind, wobei die wasserfreien Spalten (9) unterhalb der oberen Ränder und die vom Wasser durchflossenen Spalten (10) zwischen den oberen Rändern (5) angeordnet sind und wobei die Verteilereinrichtung (6) über den oberen Rändern (5) angeordnet ist.

2. Kontaktkörper nach Anspruch 1, daduch gekennzeichnet, daß die Schichten (3) jeweils einen ebenen nichtgewellten unteren Rand aufweisen, über den benachbarte Schichten (3) mit sich überkreuzenden Wellungen (4) wasserdicht aneinander befestigt sind, wobei die wasserfreien Spalten (9) oberhalb der unteren Ränder und die vom Wasser durchflossenen Spalten (10) zwischen den unteren Rändern angeordnet sind.

3. Kontaktkörper nach Anspruch 1 oder 2, dadurch gekennzeichnet, daß die Wellungen (4) der Schichten einen Winkel ≦ 45° mit der Horizontalen bilden.

4. Kontaktkörper nach einem der vorangehenden Ansprüche, dadurch gekennzeichnet, daß der Kontaktkörperblock (2) so angeordnet ist, daß seine Längsachse parallel zur Längsachse der Verteilereinrichtung (6) verläuft

5. Kontaktkörper nach einem der vorangehenden Ansprüche, dadurch gekennzeichnet, daß die Ränder (5) der Schichten (3) aneinandergeschweißt sind.

6. Kontaktkörper nach einem der vorangehenden Ansprüche, dadurch gekennzeichnet, daß unterhalb des Kontaktkörperblocks (2) eine Wasserauffang- und -verteilerwanne (8) angeordnet ist.

7. Kontaktkörper nach einem der vorangehenden Ansprüche, dadurch gekennzeichnet, daß in die Schichten (3) des Kontaktkörperblocks (2) am in Strömungsrichtung der seitlich in denselben eindringenden Luft Austrittsende Tropfenabscheider (11) integriert sind.

8. Kontaktkörper nach Anspruch 7, dadurch gekennzeichnet, daß die Tropfenabscheider (11) durch eine Vielzahl von übereinander angeordneten Wellungen gebildet sind, die in Strömungsrichtung der Luft einen Abschnitt mit geringer Steigung, einen Abschnitt mit großer Steigung und einen Abschnitt mit geringer Steigung aufweisen, wobei die Übergänge zwischen den Abschnitten diskontinuierlich ausgebildet sind.

9. Kontaktkörper nach Anspruch 8, dadurch gekennzeichnet, daß die Schichten (3) vor den Tropfenabscheidern (11) eine sich von oben nach unten erstreckende Ablaufrinne (12) aufweisen.

10. Kontaktkörper nach einem der vorangehenden Ansprüche, dadurch gekennzeichnet, daß die Schichten (3) mit in Strömungsrichtung der Luft ansteigenden Wellungen (4) im Lufteintrittsbereich einen Wellungsabschnitt (14) mit entgegengesetzter Steigung aufweisen.

11. Kontaktkörper nach einem der Ansprüche 1 bis 3 und 5 bis 10, dadurch gekennzeichnet, daß der Kontaktkörperblock so angeordnet ist, daß seine Längsachse gekreuzt zur Längsachse der Verteilereinrichtung verläuft.

12. Kontaktkörper nach einem der vorangehenden Ansprüche, dadurch gekennzeichnet, daß die Ränder (5) der Schichten (3) verstärkt (bei 16) sind.

13. Kontaktkörper nach einem der vorangehenden Ansprüche, dadurch gekennzeichnet, daß die Schichten (3) mit in Strömungsrichtung der Luft ansteigenden oder abfallenden Wellungen (4) im Lufteintrittsbereich eine sich von oben nach unten erstreckende Ablaufrinne (15) aufweisen.

14. Kontaktkörper nach Anspruch 10 und 13, dadurch gekennzeichnet, daß die Ablaufrinne (15) an der Übergangsstelle zwischen dem Wellungsabschnitt (14) mit entgegengesetzter Steigung und den in Strömungsrichtung der Luft ansteigenden Wellungen (4) angeordnet ist.

15. Kontaktkörper nach einem der vorangehenden Ansprüche, dadurch gekennzeichnet, daß der Kontaktkörperblock im Längsschnitt die Form eines gegen die Luftströmung gerichteten Parallelogrammes besitzt.

## Claims

1. A contact body (1) for an evaporation cooler, especially cooling tower, comprising at least one contact body block (2) consisting of a plurality of vertical or inclined corrugated sheets (3), wherein the corrugations (4) of adjacent sheets (3) are arranged crosswise and form passageways (9, 10) therebetween, through which air and water discharged by distributing means (6) associated with the contact body block (2) flow in countercurrent relationship, wherein adjacent sheets (3) are juxtaposed and adjoined such that water-free rows of passageways (9) and passageways (10) through which water flows result, characterized in that the sheets (3) have a plane non-corrugated upper edge (5), respectively, by means of which adjacent sheets (3) with crossing corrugations (4) are attached to one another in a water-tight manner, wherein the water-free passageways (9) are arranged below the upper edges and the passageways (10) through which water flows are arranged between the upper edges (5), and wherein the distributing means (6) is located above the upper edges (5).

2. The contact body according to claim 1, characterized in that the sheets (3) have a plane non-corrugated lower edge, respectively, by means of which adjacent sheets (3) with crossing corrugations (4) are attached to one another in a water-tight manner, wherein the water-free passageways (9) are arranged above the lower edges and the passageways (10) through which water flows are arranged between the lower edges.

3. The contact body according to claim 1 or 2, characterized in that the corrugations (4) of the sheets form an angle of ≦ 45° with respect to a horizontal line.

4. The contact body according to one of the preceding claims, characterized in that the contact body block (2) is arranged such that its longitudinal axis extends parallel with respect to the longitudinal axis of the distributing means (6).

5. The contact body according to one of the preceding claims, characterized in that the edges (5) of the sheets (3) are welded to one another.

6. The contact body according to one of the preceding claims, characterized in that a water interception and distribution trough (8) is located below the contact body block (2).

7. The contact body according to one of the preceding claims, characterized in that droplet separators (11) are integrated into the sheets (3) of the contact body block (2) at the outlet end with respect to the flow direction of the air laterally entering into the same.

8. The contact body according to claim 7, characterized in that the droplet separators (11) are formed by a plurality of superposed corrugations which, in the flow direction of the air, include a portion with small slope, a portion with large slope and a portion with small slope, wherein the transitions between the portions are discontinuously formed.

9. The contact body according to claim 8, characterized in that the sheets (3) have a discharge channel (12) extending from above to below in front of the droplet separators (11).

10. The contact body according to one of the preceding claims, characterized in that the sheets (3) with corrugations (4) rising in the flow direction of air have a corrugation portion (14) with opposite slope in the air inlet range.

11. The contact body according to one of the claims 1 to 3 and 5 to 10, characterized in that the contact body block is arranged in such a manner that its longitudinal axis extends crosswise with respect to the longitudinal axis of the distributing means.

12. The contact body according to one of the preceding claims, characterized in that the edges (5) of the sheets (3) are reinforced (at 16).

13. The contact body according to one of the preceding claims, characterized in that the sheets (3) with corrugations (4) rising or descending in the flow direction of air have a discharge channel (15) extending from above to below in the air inlet range.

14. The contact body according to claims 10 and 13, characterized in that the discharge channel (15) is located at the transition place between the corrugation portion (14) mit opposite slope and the corrugations (4) rising in the direction of flow of the air.

15. The contact body according to one of the preceding claims, characterized in that the contact body block, in longitudinal section, has the shape of a parallelogram directed against the flow of air.

## Revendications

1. Corps de contact (1) pour un refroidisseur à évaporation, en particulier pour tour de refroidissement, comportant au moins un bloc de corps de contact (2) qui est constitué de l'assemblage de plusieurs couches (3) ondulées, disposées verticalement ou obliquement, tandis que les ondulations (4) de couches (3) voisines sont disposées de manière à se croiser et forment entre elles des interstices (9, 10) qui sont traversés à courants croisés par de l'air et de l'eau qui est fournie par un dispositif de distribution (6) associé à un des blocs de corps de contact (2), tandis que des couches (3) voisines sont situées l'une contre l'autre et sont reliées l'une à l'autre de manière à fournir des rangées d'interstices exempts d'eau (9) et d'interstices traversés par l'eau (10), caractérisé en ce que les couches (3) présentent chacune un bord supérieur plan (5), non ondulé, par lesquels des couches (3) voisines présentant des ondulations (4) croisées sont fixées l'une à l'autre de manière étanche à l'eau, tandis que les interstices dépourvus d'eau (9) sont disposés en dessous des bords supérieurs et que les interstices traversés par l'eau (10) sont disposés entre les bords supérieurs (5), et tandis que le dispositif de distribution (6) est disposé au-dessus des bords supérieurs (5).

2. Corps de contact selon la revendication 1, caractérisé en ce que les couches (3) présentent chacune un bord inférieur plan, non ondulé, par lequel des couches (3) voisines comportant des ondulations (4) croisées sont fixées l'une à l'autre de manière étanche à l'eau, tandis que les interstices dépourvus d'eau (9) sont disposés au-dessus des bords inférieurs et que les interstices traversés par l'eau (10) sont situés entre les bords inférieurs.

3. Corps de contact selon la revendication 1 ou 2, caractérisé en ce que les ondulations (4) des couches forment avec l'horizontale un angle ≦ 45°.

4. Corps de contact selon l'une quelconque des revendications précédentes, caractérisé en ce que le bloc de corps de contact (2) est disposé de telle sorte que son axe longitudinal s'étend parallèlement à l'axe longitudinal du dispositif de distribution (6).

5. Corps de contact selon l'une quelconque des revendications précédentes, caractérisé en ce que les bords (5) de couches (3) sont soudés l'un à l'autre.

6. Corps de contact selon l'une quelconque des revendications précédentes, caractérisé en ce qu'en dessous du bloc de corps de contact (2) est disposée une cuve de reprise d'eau et de distribution (8).

7. Corps de contact selon l'une quelconque des revendications précédentes, caractérisé en ce que des séparateurs de gouttes (11) sont intégrés dans les couches (3) du bloc de corps de contact (2), à l'extrémité située du côté de la sortie dans le sens d'écoulement de l'air pénétrant latéralement dans ce bloc de corps de contact.

8. Corps de contact selon la revendication 7, caractérisé en ce que les séparateurs de gouttes (11) sont formés par plusieurs ondulations disposées les unes au-dessus des autres, qui présentent dans la direction d'écoulement de l'air un tronçon de faible pente, un tronçon de pente plus forte et un tronçon de faible pente, tandis que les transitions entre les tronçons sont configurées de manière discontinue.

9. Corps de contact selon la revendication 8, caractérisé en ce que les couches (3) situées en avant des séparateurs de gouttes (11) présentent une rigole de décharge (12) s'étendant du haut vers le bas.

10. Corps de contact selon l'une quelconque des revendications précédentes, caractérisé en ce que les couches (3) comportant des ondulations (4) montantes dans la direction d'écoulement de l'air présentent dans la région d'entrée de l'air un tronçon d'ondulation (14) de pente opposée.

11. Corps de contact selon l'une quelconque des revendications 1 à 3 et 5 à 10, caractérisé en ce que le bloc de corps de contact est disposé de telle sorte que son axe longitudinal s'étend en croix par rapport à l'axe longitudinal du dispositif de distribution.

12. Corps de contact selon l'une quelconque des revendications précédentes, caractérisé en ce que les bords (5) des couches (3) sont renforcés (en 16).

13. Corps de contact selon l'une quelconque des revendications précédentes, caractérisé en ce que les couches (3) présentant des ondulations (4) montantes ou descendantes dans la direction d'écoulement de l'air présentent dans la région d'entrée de l'air une rigole de décharge (15) s'étendant du haut vers le bas.

14. Corps de contact selon les revendications 10 et 13, caractérisé en ce que la rigole de décharge (15) est disposée à l'endroit de la transition entre le tronçon d'ondulation (14) de pente opposée et les ondulations (4) montantes dans la direction d'écoulement de l'air.

15. Corps de contact selon l'une quelconque des revendications précédentes, caractérisé en ce que le bloc de corps de contact possède en coupe longitudinale la forme d'un parallélogramme orienté en opposition à l'écoulement de l'air.
